# FASCICULE DE BREVET EUROPEEN

(11) **EP 1 643 145 B1**
(45) Date de publication et mention de la délivrance du brevet: **30.09.2009**
(21) Numéro de dépôt: 05108238.6
(22) Date de dépôt: 08.09.2005
(51) Int. Cl.: F16D 13/58, F16D 13/40, F16D 13/38

(54) **Embrayage perfectionné pour véhicule automobile et procédé de montage de cet embrayage**
Verbesserte Kupplungsanordnung für ein Kraftfahrzeug und deren Montageverfahren
Improved coupling arrangement for motor vehicle and its method of mounting

(30) Priorité: 30.09.2004 FR 0452215
(43) Date de publication de la demande: 05.04.2006
(73) Titulaire: Valeo Embrayages, 80009 Amiens Cedex (FR)
(72) Inventeur: Lopez-Perez, Carlos, 80009 Amiens (FR)
(74) Mandataire: Lemaire, Marc

(56) Documents cités:
- EP-A- 0 711 930
- DE-A1- 2 460 963
- FR-A- 2 667 370
- US-A- 5 321 878
- US-A- 5 853 075
- US-A- 6 070 708

## Description

La présente invention concerne un embrayage perfectionné pour véhicule automobile et un procédé de montage de cet embrayage.

Dans un véhicule automobile, un embrayage est destiné à coupler un organe rotatif menant, tel qu'un vilebrequin d'un monteur du véhicule automobile, à un organe rotatif mené, tel qu'un arbre d'entrée d'une boîte de vitesses du véhicule automobile, les organes rotatifs menant et mené ayant des axes de rotation sensiblement alignés.

L'embrayage comporte au moins un mécanisme entraîné en rotation par l'organe menant. Ce mécanisme comprend un couvercle, un diaphragme et un plateau de pression tous liés en rotation avec l'organe menant.

Pour couper les organes rotatifs menant et mené, le diaphragme serre un disque de friction, lié en rotation avec l'organe rotatif mené, entre le plateau de pression et un plateau de réaction solidaire en rotation du couvercle.

On connaît déjà, dans l'état de la technique, notamment d'après FR-A-2 667 370, un embrayage, notamment pour véhiculé automobile, destiné à coupler des organes rotatifs menant et mené d'axes de rotation sensiblement alignés, du type comportant :
- un dispositif de friction, lié en rotation à l'organe rotatif mené,
- un diaphragme, lié en rotation à l'organe rotatif menant, agencé axialement entre l'organe rotatif menant et le dispositif de friction, et
- un volant d'inertie, lié en rotation à l'organe rotatif menant.

On connaît également dans l'état de la technique, notamment d'après DE 24 60 963, un embrayage similaire à celui du préambule de la revendication 1,

Généralement, pour fabriquer un embrayage de ces type, on pré-assemble tout d'abord des premier et second sous-ensembles, puis on assemble entre eux ces deux sous-ensembles lors du montage de l'ensemble de l'embrayage sur le véhicule.

Le premier sous-ensemble pré-assemblé comprend généralement le volant d'inertie, et le second sous-ensemble pré-assemblé comprend généralement le diaphragme et le dispositif de friction.

Lors du montage de l'ensemble de l'embrayage sur le véhicule, on fixe tout d'abord le premier sous-ensemble (volant d'inertie) sur l'organe rotatif menant. Le second sous-ensemble (diaphragme et dispositif de friction) n'étant pas encore monté sur le premier sous-ensemble, il est possible de permettre à un outil de manoeuvre d'accéder à des organes de fixation du volant d'inertie sur l'organe rotatif menant. Ensuite, on fixe le second sous-ensemble (diaphragme .et dispositif de friction) sur le volant d'inertie. Le dispositif de friction empêche alors l'accès par un outil de manoeuvre aux organes de fixation du volant d'inertie sur l'organe rotatif menant.

Ainsi, les constructeurs d'automobiles doivent prévoir sur leur chaîne de montage des première et seconde opérations de fixation des premier et second sous-ensembles de l'embrayage.

Le cas échéant, pour démonter l'embrayage, il faudra tout d'abord démonter le second sous-ensemble (mécanisme et dispositif de friction) avant de pouvoir démonter le premier sous-ensemble (volant d'inertie).

Par ailleurs, on connaît dans l'état de la technique, notamment d'après EP-A-0 71 1 930, un procédé de montage d'un embrayage sur un vilebrequin, dans lequel le dispositif de friction et le diaphragme sont ajourés par des moyens formant un accès à un outil de manoeuvre d'un organe de fixation du volant d'inertie sur l'organe menant.

L'invention a notamment pour but de simplifier le montage et le démontage de l'embrayage dans le véhicule automobile.

A cet effet, l'invention a pour objet un embrayage selon la revendication 1.

Grâce à l'invention, on peut pré-assembler un ensemble unique comprenant le volant d'inertie, le diaphragme et le dispositif de friction. Puis, les constructeurs d'automobiles n'ont plus qu'à fixer (en une seule opération) cet unique ensemble pré-assemblé sur l'organe menant, grâce aux moyens d'accès de l'outil de manoeuvre des organes de fixation du volant d'inertie sur l'organe rotatif menant.

Le cas échéant, l'ensemble de l'embrayage peut être démonté en une seule opération.

Un embrayage selon l'invention peut en outre comporter l'une ou plusieurs des caractéristiques suivantes :
- le volant d'inertie est fixé sur l'organe menant a l'aide de plusieurs organes de fixations formant vis, répartis en couronne ;
- le diaphragme est articulé sur un organe de poussée, de forme sensiblement de révolution et d'axe sensiblement aligné avec les axes des organes rotatifs menant et mené, le diamètre externe de cet organe de poussée étant adapté pour être le plus grand possible tout en ne fraisant pas obstacle à l'outil de manoeuvre;
- le dispositif de friction comporte au moins un premier disque de friction ajouré par les moyens formant accès à l'outil de manoeuvre ;
- le dispositif de friction comporte au moins un premier moyeu sur lequel est fixé le premier disque de friction, ce premier moyeu étant agencé, au moyen d'une première liaison glissière, sur l'organe rotatif mené, et étant ajouré par les moyens formant accès à l'outil de manoeuvre ;
- le dispositif de friction comporte un second disque de friction fixé sur un second moyeux, ce second moyeu étant agencé, au moyen d'une seconde liaison glissière, sur le premier moyeu :
- l'organe rotatif mené est muni de cannelures radialement externes et le premier moyeu est muni de cannelures, radialement internes, complémentaires des cannelures de l'organe rotatif mené, ces cannelures de l'organe rotatif mené et du premier moyeu coopérant ensemble pour former la première liaison glissière ;
- le premier moyeu est muni de cannelures radialement externes et le second moyeu est muni de cannelures, radialement internes, complémentaires des cannelures radialement externes du premier moyeu, ces cannelures des premier et second moyeux coopérant ensemble pour former la seconde liaison glissière ;
- les premier et second moyeux sont respectivement munis de premiers et seconds moyens de fixation de disque de friction, ces premiers et seconds moyens de fixation étant décalés radialement l'un par rapport à l'autre ;
- la distance radiale des seconds moyens de fixation de disque de friction par rapport à l'axe de l'organe rotatif mené est supérieure à la distance radiale des premiers moyens de fixation de disque de friction par rapport à cet axe de l'organe rotatif mené ;
- le volant d'inertie est en tôle emboutie découpée ;
- le volant d'inertie comporte une butée annulaire, continue ou non, coopérant avec le diaphragme pour le centrage de ce diaphragme ;
- le volant est muni d'une couronne munie d'une denture périphérique, dite couronne de démarreur ;
- l'embrayage comporte un mécanisme, lié en rotation avec le volant d'inertie, comprenant un couvercle en fonte dans lequel sont logés le dispositif de friction et le diaphragme ;
- le mécanisme comporte des plateaux de pression et de réaction, destinés à enserrer le disque de friction, le plateau de réaction étant formé par le couvercle ;
- l'embrayage comporte des moyens de fixation du couvercle sur le volant d'inertie, par exemple des moyens de vissage ;
- les moyens formant accès à l'outil de manoeuvre comportent des ensembles d'ajours répartis en couronnes, agencées respectivement sur le dispositif de friction et le diaphragme.

L'invention concerne également un procédé de montage d'un embrayage tel que décrit précédemment, comprenant les étapes suivantes :
- on pré-assemble un ensemble unique comprenant le volant d'inertie, le diaphragme et le dispositif de friction, puis
- on fixe cet unique ensemble pré-assemblé sur l'organe rotatif menant.

L'invention sera mieux comprise à la lecture de la description qui va suivre, donnée uniquement à titre d'exemple et faite en se référant aux dessins annexés dans lesquels :
- la figure 1 est une vue en coupe axiale d'un embrayage selon un exemple de mode de réalisation de l'invention ;
- la figure 2 est une vue de face d'un diaphragme de l'embrayage de la figure 1 ;
- la figure 3 est une vue de face d'un moyeu de l'embrayage de la figure 1.

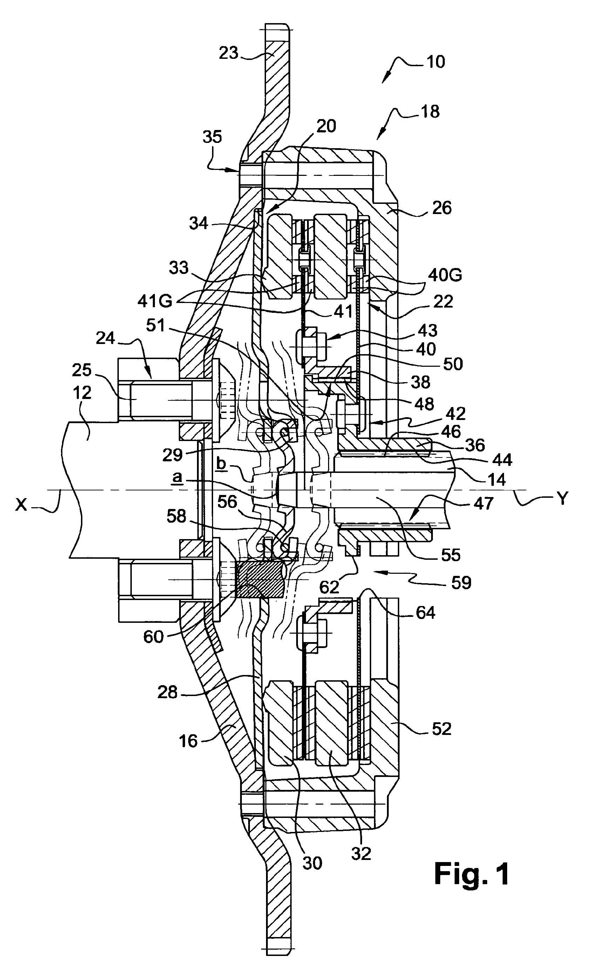

On a représenté sur la figure 1 un embrayage, notamment pour un véhicule automobile, désigné par la référence générale 10. Cet embrayage 10 est destiné à coupler des organes rotatifs menant 12 et mené 14, d'axes de rotation X, Y sensiblement alignés.

En général, l'organe rotatif menant 12 est un vilebrequin d'un moteur du véhicule automobile, et l'organe rotatif mené 14 est un arbre d'entrée d'une boîte de vitesses du véhicule automobile. Dans l'exemple représenté, cet arbre 14 d'entrée de boîte de vitesses est creux.

L'embrayage 10 comporte un volant d'inertie 16, sur lequel est fixé un sous-ensemble 18 comportant un mécanisme 20 et un dispositif de friction 22. Ce volant d'inertie 16 est muni d'une couronne 23 munie d'une denture périphérique, dite couronne de démarreur.

On notera que le volant d'inertie 16 est réalisé, dans l'exemple décrit, en tôle emboutie découpée. Ainsi, ce volant d'inertie 16 a une épaisseur relativement faible, et donc une inertie également relativement faible.

Le volant d'inertie 16 est fixé et lié en rotation à l'organe rotatif menant 12 grâce à des moyens de fixation 24, comportant plusieurs organes de fixation 25, par exemple des vis, disposés en couronne. Dans l'exemple représenté, le volant d'inertie 16 est fixé à l'organe rotatif menant 12 grâce à cinq organes de fixation 25.

Le mécanisme 20 comporte un couvercle 26, réalisé en fonte dans l'exemple décrit, afin de lui conférer une rigidité relativement importante. Le mécanisme 20 comporte en outre un diaphragme 28 muni de doigts radiaux 29, un plateau de pression 30 et un plateau intermédiaire 32, tous liés en rotation avec le couvercle 26, dans lequel ils sont logés. On notera que les plateaux de pression 30 et intermédiaire 32 sont liés au couvercle 26 au moyen de languettes élastiques axialement (non représentées).

Le diaphragme 28 est agencé entre l'organe rotatif menant 12 et le dispositif de friction 22. Plus précisément, le diaphragme 28 comporte un bord extérieur prenant appui sur le volant d'inertie 16 et une partie annulaire, radialement interne par rapport au bord extérieur prenant appui contre une butée 33, formant cordon, du plateau de pression 30. On notera que le volant d'inertie 16 est muni d'une butée annulaire 34, continue ou non, coopérant avec le contour extérieur du diaphragme 28 pour le centrage de ce diaphragme 28 par rapport à l'axe X de l'organe rotatif menant 12.

Le couvercle 26 est fixé et lié en rotation au volant d'inertie 16 grâce à des moyens de fixation 35 du mécanisme au volant d'inertie 16. Généralement, ces moyens de fixation 35 sont des moyens de vissage.

Le dispositif de friction 22 comporte des premier 36 et second 38 moyeux sur lesquels sont fixés respectivement des premier 40 et second 41 disques de friction à l'aide de premiers 42 et seconds 43 moyens de fixation. Ces premiers 42 et seconds 43 moyens de fixation comprennent généralement des rivets.

Les premier 40 et second 41 disques de friction comportent respectivement des première 40G et seconde 41 G garnitures dont l'épaisseur a tendance à diminuer avec l'usure.

Le premier moyeu 36 est muni de cannelures 44, radialement internes, destinées à coopérer avec des cannelures 46, radialement externes, de l'organe rotatif mené 14, pour former une première liaison glissière 47. Ainsi, l'organe rotatif mené 14 et le premier moyeu 36 sont liés en rotation, et peuvent se déplacer axialement l'un par rapport à l'autre.

De même, le second moyeu 38 est muni de cannelures 48, radialement internes, destinées à coopérer avec des cannelures 50, radialement externes, du premier moyeu 36, pour former une seconde liaison glissière 51. Ainsi, les premier 36 et second 38 moyeux sont liés en rotation, et peuvent se déplacer axialement l'un par rapport à l'autre.

Pour coupler les organes rotatifs menant 12 et mené 14 entre eux, le plateau de pression 30 est poussé par le diaphragme 28 en direction d'un plateau de réaction 52, formé par le couvercle 26, afin que le premier disque de friction 40 soit enserré entre le plateau intermédiaire 32 et le plateau de réaction 52, et que le second disque de friction 41 soit enserré entre le plateau de pression 30 et le plateau intermédiaire 32.

Les plateaux de pression 30, intermédiaire 32, et de réaction 52 étant tous liés en rotation avec l'organe rotatif menant 12, et les premier 40 et second 41 disques de friction étant liés en rotation avec l'organe rotatif mené 14, les organes rotatifs menant 12 et mené 14 sont ainsi couplés entre eux.

On notera que l'embrayage 10, comportant deux disques de friction 40, 41, peut transmettre un même couple qu'un embrayage classique ne comportant qu'un seul disque de friction de dimensions plus importantes. Ainsi, les premier 40 et second 41 disques de friction sont de dimensions réduites par rapport à un disque de friction classique. Les dimensions de l'embrayage 10, et par conséquent son inertie, sont donc aussi réduites par rapport à un embrayage classique.

Le diaphragme 28 est actionné au moyen d'une tige de commande 55 agencé dans l'arbre creux 14. A cet effet, la tige de commande 55 comporte une extrémité coopérant avec un organe 56 de poussée, sur lequel sont articulés les doigts 29 du diaphragme 28, par exemple au moyen d'un organe annulaire 58 porté par l'organe 56 de poussée et coopérant avec les doigts 29. Cet organe de poussée 56 est de forme générale de révolution, d'axe sensiblement aligné avec l'axe X de l'organe rotatif menant 12.

On a représenté sur la figure 1 trois positions a, b, c du diaphragme 28 et de la tige de commande 55.

La position a correspond à la position d'embrayage pour laquelle les organes rotatifs menant 12 et mené 14 sont couplés entre eux. Le diaphragme 28 est rappelé élastiquement vers la position a d'embrayage de façon à enserrer les premier 40 et second 41 disques de friction respectivement entre les plateaux intermédiaire 32 et de réaction 52, et entre les plateaux de pression 30 et intermédiaire 32.

La position b correspond à la position de débrayage pour laquelle les organes rotatifs menant 12 et mené 14 sont découplés. Le diaphragme 28 est sollicité à l'encontre de sa force de rappel vers la position b par déplacement de la tige de commande 55. Les languettes élastiques rappellent les plateaux de pression 30 et intermédiaires 32 vers une position d'écartement par rapport aux premier 40 et second 41 disques de friction.

La position c correspond à la position d'embrayage après usure des première 40G et seconde 41G garnitures de friction. La course du diaphragme 28 entre les positions d'embrayage et de débrayage est alors plus longue.

Afin de laisser à l'organe de poussée 56 un espace suffisant pour effectuer cette course plus longue, les premiers 42 et seconds 43 moyens de fixation des disques de friction sur les premier 36 et second 38 moyeux sont décalés radialement l'un par rapport à l'autre. La distance radiale des seconds moyens 43 de fixation par rapport à l'axe Y est supérieure à la distance radiale des premiers moyens 42 de fixation par rapport à cet axe Y de façon à former un dégagement axial et radial autorisant le déplacement du diaphragme 28.

L'embrayage 10 peut être pré-assemblé en un ensemble unique en dehors d'une chaîne de montage d'un véhicule. Cet ensemble unique peut ensuite être monté dans le véhicule à l'aide des moyens décrits ci-dessous.

Le diaphragme 28 et le dispositif de friction 22 sont ajourés par des moyens 59 formant un accès à un outil classique de manoeuvre des organes 25 de fixation du volant d'inertie 16 sur l'organe menant 12.

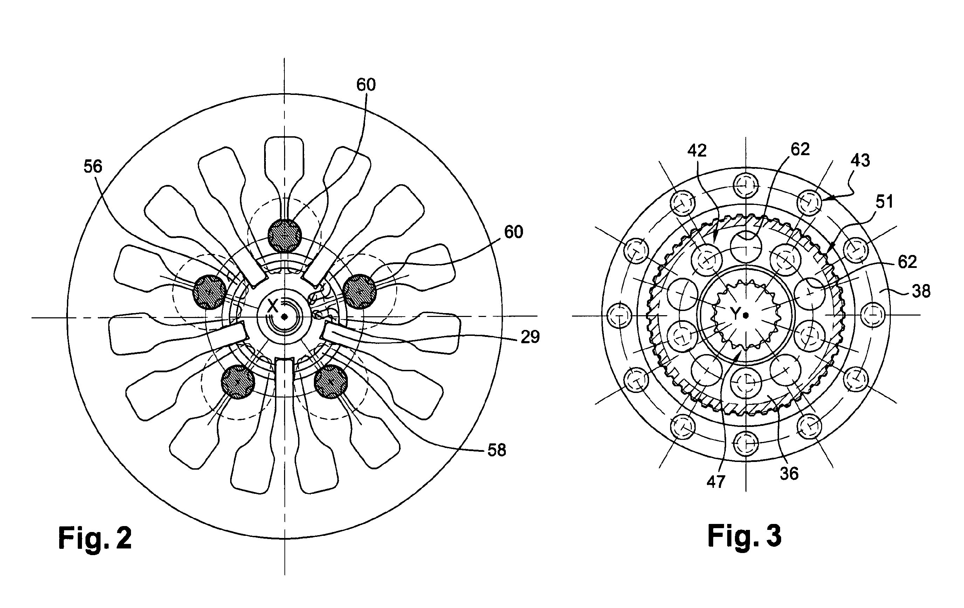

Comme représenté sur la figure 2, le diaphragme 28 comporte cinq ajours 60 disposés en couronne, alternant avec les doigts radiaux 29 coopérant avec l'organe de poussée 56.

On notera que le diamètre externe de l'organe de poussée 56 est adapté pour être le plus grand possible tout en ne faisant pas obstacle à l'outil de manoeuvre.

Comme représenté sur la figure 3, le premier moyeu 36 est muni de cinq ajours 62 disposés en couronne, alternant avec les rivets des moyens 42 de fixation. Les ajours 62 sont disposés sensiblement à une même distance radiale par rapport à l'axe X que les ajours 60. L'espacement angulaire des ajours 62 est sensiblement identique à celui des ajours 60. Par ailleurs, le premier disque de friction 40 est aussi muni de cinq ajours 64, disposés en regard des ajours 62 du premier moyeu 36.

Ainsi, lorsque les ajours 60, 62, 64 sont alignés axialement, éventuellement après rotation des éléments de l'embrayage les uns par rapport aux autres, il est possible de faire passer l'outil de manoeuvre à travers ces ajours 60, 62, 64 pour atteindre les cinq organes de fixation 25 du volant d'inertie sur l'organe rotatif menant 12.

On notera que grâce à ces ajours 60, 62, 64, le montage de l'embrayage 10 sur le véhicule automobile est simplifié. En effet, l'embrayage 10 est pré-assemblé pour former un ensemble 10 unique comprenant le volant d'inertie 16, le mécanisme 20 (en particulier le diaphragme 28) et le dispositif de friction 22. Les organes de fixation 25 sont déjà montés sur le volant d'inertie 16, avant que le mécanisme 20 soit rapporté sur ce volant d'inertie. En effet, les moyens 59 permettant le passage de l'outil de manoeuvre ne permettent pas le passage de ces organes de fixation 25.

Puis, l'unique ensemble 10 pré-assemblé est fixé, en une seule opération, sur l'organe rotatif menant 12, sans que l'accès aux organes de fixation 25 soit obturé.

Parmi les avantages de l'invention, on notera que les première 40G et seconde 41G garnitures de friction sont liées rigidement en rotation avec des moyeux correspondants 36, 38 à l'aide de moyens peu encombrants.

L'absence de moyens de liaison élastique en rotation entre les garnitures 40G, 41G et les moyeux correspondants 36, 38 limite l'encombrement du dispositif de friction et facilite l'agencement des accès de l'outil de manoeuvre des organes de fixation 25.

Par ailleurs, l'absence de ces moyens de liaison élastique contribue, en combinaison avec l'utilisation du volant 16 en tôle et des deux disques de friction 40, 41, à conférer des faibles inerties au mécanisme 20 et au dispositif de friction 22 de l'embrayage 10.

Un tel embrayage 10, à faible moment d'inertie, est particulièrement adapté pour des véhicules sportifs, notamment des motocycles.

## Revendications

1. Embrayage (10), notamment pour véhicule automobile, destiné à coupler des organes rotatifs menant (12) et mené (14) d'axes de rotation (X, Y) sensiblement alignés, du type comportant :
- un dispositif de friction (22), lié en rotation à l'organe rotatif mené (14), comprenant au moins deux disques de friction (40, 41),
- un diaphragme (28), lié en rotation à l'organe rotatif menant (12), agencé axialement entre l'organe rotatif menant (12) et le dispositif de friction (22), et
- un volant d'inertie (16), lié en rotation à l'organe rotatif menant (12),
**caractérisé en ce que** :
- le dispositif de friction (22) et le diaphragme (28) sont ajourés par des moyens (59) formant un accès à un outil de manoeuvre d'un organe (25) de fixation du volant d'inertie (16) sur l'organe menant (12),
- le dispositif de friction (22) comporte au moins un premier moyeu (36) sur lequel est fixé le premier disque de friction (40), ce premier moyeu (36) étant agencé, au moyen d'une première liaison glissière (47), sur l'organe rotatif mené (14), et étant ajouré par les moyens (59) formant accès à l'outil de manoeuvre,
- le second (41) disque de friction est fixé sur un second (38) moyeu, ce second moyeu (38) étant agencé, au moyen d'une seconde liaison glissière (51), sur le premier moyeu (36), et
- les premier (36) et second (38) moyeux sont respectivement munis de premiers (42) et seconds (43) moyens de fixation de disque de friction, ces premiers (42) et seconds (43) moyens de fixation étant décalés radialement l'un par rapport à l'autre.

2. Embrayage (10) selon la revendication 1, **caractérisé en ce que** le volant d'inertie (16) est fixé sur l'organe menant (12) à l'aide de plusieurs organes de fixations (25) formant vis, répartis en couronne.

3. Embrayage (10) selon la revendication 1 ou 2, **caractérisé en ce que** le diaphragme (28) est articulé sur un organe de poussée (56), de forme sensiblement de révolution et d'axe sensiblement aligné avec les axes des organes rotatifs menant (12) et mené (14), le diamètre externe de cet organe de poussée (56) étant adapté pour être le plus grand possible tout en ne faisant pas obstacle à l'outil de manoeuvre.

4. Embrayage (10) selon l'une quelconque des revendications précédentes, **caractérisé en ce que** l'organe rotatif mené (14) est muni de cannelures (46) radialement externes et le premier moyeu (36) est muni de cannelures (44), radialement internes, complémentaires des cannelures (46) de l'organe rotatif mené (14), ces cannelures (46, 44) de l'organe rotatif mené (14) et du premier moyeu (36) coopérant ensemble pour former la première liaison glissière (47).

5. Embrayage (10) selon l'une quelconque des revendications précédentes, **caractérisé en ce que** le premier moyeu (36) est muni de cannelures (50) radialement externes et le second moyeu (38) est muni de cannelures (48), radialement internes, complémentaires des cannelures (50) radialement externes du premier moyeu (36), ces cannelures des premier (36) et second (38) moyeux coopérant ensemble pour former la seconde liaison glissière (51).

6. Embrayage (10) selon l'une quelconque des revendications précédentes, **caractérisé en ce que** la distance radiale des seconds moyens (43) de fixation de disque de friction par rapport à l'axe (Y) de l'organe rotatif mené (14) est supérieure à la distance radiale des premiers moyens (42) de fixation de disque de friction par rapport à cet axe (Y) de l'organe rotatif mené (14).

7. Embrayage (10) selon l'une quelconque des revendications précédentes, **caractérisé en ce que** le volant d'inertie (16) est en tôle emboutie découpée.

8. Embrayage (10) selon l'une quelconque des revendications précédentes, **caractérisé en ce que** le volant d'inertie (16) comporte une butée annulaire (34), continue ou non, coopérant avec le diaphragme (28) pour le centrage de ce diaphragme (28).

9. Embrayage (10) selon l'un quelconque des revendications précédentes, **caractérisé en ce que** le volant (16) est muni d'une couronne (23) munie d'une denture périphérique, dite couronne (23) de démarreur.

10. Embrayage (10) selon l'une quelconque des revendications précédentes, **caractérisé en ce qu'**il comporte un mécanisme (20), lié en rotation avec le volant d'inertie (16), comprenant un couvercle (26) en fonte dans lequel sont logés le dispositif de friction (22) et le diaphragme (28).

11. Embrayage (10) selon la revendication 10, **caractérisé en ce que** le mécanisme (20) comporte des plateaux de pression (30) et de réaction (52), destinés à enserrer le disque de friction (40), le plateau de réaction (52) étant formé par le couvercle (26).

12. Embrayage (10) selon la revendication 10 ou 11, **caractérisé en ce qu'**il comporte des moyens (35) de fixation du couvercle (26) sur le volant d'inertie (16), par exemple des moyens de vissage.

13. Embrayage (10) selon l'une quelconque des revendications précédentes, **caractérisé en ce que** les moyens formant accès à l'outil de manoeuvre comportent des ensembles d'ajours (60, 62) répartis en couronnes, agencées respectivement sur le dispositif de friction (22) et le diaphragme (28).

14. Procédé de montage d'un embrayage (10) selon l'une quelconque des revendications précédentes, **caractérisé en ce que**
- on pré-assemble un ensemble (10) unique comprenant le volant d'inertie (16), le diaphragme (28) et le dispositif de friction (22), puis
- on fixe cet unique ensemble (10) pré-assemblé sur l'organe rotatif menant (12).

## Claims

1. Clutch (10), in particular for a motor vehicle, which is designed to couple driving (12) and driven (14) rotary units with substantially aligned axes of rotation (X, Y), of the type comprising:
- a friction device (22), which is connected in rotation to the driven rotary unit (14), comprising at least two friction discs (40, 41);
- a diaphragm (28) which is connected in rotation to the driving rotary unit (12), and is arranged axially between the driving rotary unit (12) and the friction device (22); and
- an inertia wheel (16) which is connected in rotation to the driving rotary unit (12),
**characterised in that** :
- the friction device (22) and the diaphragm (28) are perforated by means (59) which form an access for a tool for manoeuvring a unit (25) for securing of the inertia wheel (16) on the driving unit (12);
- the friction device (22) comprises at least one first hub (36) on which the first friction disc (40) is secured, this first hub (36) being arranged, by means of a first slide connection (47), on the driven rotary unit (14), and being perforated by the means (59) which form access for the manoeuvring tool;
- the second friction disc (41) is secured on a second hub (38), this second hub (38) being arranged by means of a second slide connection (51) on the first hub (36); and
- the first (36) and second (38) hubs are provided respectively with first (42) and second (43) means for securing the friction discs, these first (42) and second (43) securing means being offset radially relative to one another.

2. Clutch (10) according to claim 1, **characterised in that** the inertia wheel (16) is secured on the driving unit (12) by means of a plurality of securing units (25) which form a screw, and are distributed in the form of a ring.

3. Clutch (10) according to claim 1 or 2, **characterised in that** the diaphragm (28) is articulate on a thrust unit (56) with a form substantially of revolution, and with an axis which is substantially aligned with the axes of the driving (12) and driven (14) rotary units, the outer diameter of this thrust unit (56) being designed to be as large as possible without causing any obstacle to the manoeuvring tool.

4. Clutch (10) according to any one of the preceding claims, **characterised in that** the driven rotary unit (14) is provided with radially outer grooves (46) and the first hub (36) is provided with radially inner grooves (44) which are complementary to the grooves (46) of the driven rotary unit (14), these grooves (46, 44) of the driven rotary unit (14) and of the first hub (36) co-operating together in order to form the first slide connection (47).

5. Clutch (10) according to any one of the preceding claims, **characterised in that** the first hub (36) is provided with radially outer grooves (50) and the second hub (38) is provided with radially inner grooves (48) which are complementary to the radially outer grooves (50) of the first hub (36), these grooves of the first hub (36), these grooves of the first (36) and second (38) hubs co-operating together in order to form the second slide connection (51).

6. Clutch (10) according to any one of the preceding claims, **characterised in that** the radial distance of the second means (43) for securing the friction disc, relative to the axis (Y) of the driven rotary unit (14), is greater than the radial distance of the first means (42) for securing the friction disc relative to this axis (Y) of the driven rotary unit (14),

7. Clutch (10) according to any one of the preceding claims, **characterised in that** the inertia wheel (16) is made of cut-out stamped metal plate.

8. Clutch (10) according to any one of the preceding claims, **characterised in that** the inertia wheel (16) comprises an annular stop (34) which is or is not continuous, and co-operates with the diaphragm (28), for centring of this diaphragm (28).

9. Clutch (10) according to any one of the preceding claims, **characterised in that** the wheel (16) is provided with a ring (23) which is provided with peripheral toothing, and is known as the starter ring (23).

10. Clutch (10) according to any one of the preceding claims, **characterised in that** it comprises a mechanism (20) which is connected in rotation with the inertia wheel (16), comprising a cast iron cover (26) in which the friction device (22) and the diaphragm (28) are accommodated.

11. Clutch (10) according to claim 10, **characterised in that** the mechanism (20) comprises pressure (30) and reaction (52) plates, which are designed to enclose the friction disc (40), the reaction plate (52) being formed by the cover (26).

12. Clutch (10) according to claim 10 or 11, **characterised in that** it comprises means (35) for securing the cover (26) on the inertia wheel (16), for example screwing means.

13. Clutch (10) according to any one of the preceding claims, **characterised in that** the means which form access to the manoeuvring tool comprise sets of openings (60, 62) distributed in rings, which are arranged respectively on the friction device (22) and the diaphragm (28).

14. Method for fitting a clutch (10) according to any one of the preceding claims,
**characterised in that**:
- a single assembly (10) is pre-assembled, comprising the inertia wheel (16), the diaphragm (28) and the friction device (22), then
- this single pre-assembled assembly (10) is secured on the leading rotary unit (12).

## Patentansprüche

1. Kupplung (10), insbesondere für ein Kraftfahrzeug, die dazu bestimmt ist, ein treibendes (12) und ein getriebenes (14) Rotations-Organ mit in etwa fluchtenden Rotationsachsen (X, Y) miteinander zu koppeln, umfassend:
- eine drehfest mit dem getriebenen Rotations-Organ (14) verbundene Reibungsvorrichtung (22), die mindestens zwei Reibscheiben (40, 41) umfasst,
- eine drehfest mit dem treibenden Rotationsorgan (12) verbundene Membranfeder (28), die axial zwischen dem treibenden Rotations-Organ (12) und der Reibungsvorrichtung (22) angeordnet ist, und
- ein drehfest mit dem treibenden Rotations-Organ (12) verbundenes Schwungrad (16),
**dadurch gekennzeichnet, dass:**
- die Reibungsvorrichtung (22) und die Membranfeder (28) durch Mittel (59) durchbrochen sind, welche einen Zugang für ein Betätigungswerkzeug eines Organs (25) zur Befestigung des Schwungrads (16) an dem treibenden Organ (12) bilden,
- die Reibungsvorrichtung (22) mindestens eine erste Nabe (36) umfasst, auf der die erste Reibungsscheibe (40) befestigt ist, wobei diese erste Nabe (36) mittels einer ersten Gleit-Führungs-Verbindung (47) auf dem getriebenen Rotations-Organ (14) angeordnet und durch die Mittel (59), welche einen Zugang für das Betätigungswerkzeug bilden, durchbrochen ist,
- die zweite Reibscheibe (41) auf einer zweiten Nabe (38) befestigt ist, wobei diese zweite Nabe (38) mittels einer zweiten Gleit-Führungs-Verbindung (51) auf der ersten Nabe (36) angeordnet ist, und
- die erste (36) und zweite (38) Nabe jeweils mit ersten (42) und zweiten (43) Mitteln zur Befestigung der Reibungsscheibe versehen sind, wobei diese ersten (42) und zweiten (43) Befestigungsmittel relativ zueinander radial versetzt sind.

2. Kupplung (10) nach Anspruch 1, **dadurch gekennzeichnet, dass** das Schwungrad (16) an dem treibenden Organ (12) mit Hilfe mehrer Befestigungsorgane (25) in der Form von kranzförmig verteilten Schrauben befestigt ist.

3. Kupplung (10) nach Anspruch 1 oder 2, **dadurch gekennzeichnet, dass** die Membranfeder (28) an einem in etwa kreisförmigen und in etwa mit den Achsen der treibenden (12) und getriebenen (14) Rotations-Organe fluchtenden Druck-Organ (56) angelenkt ist, wobei der Außendurchmesser dieses Druck-Organs (56) so groß wie möglich angepasst ist, ohne dabei ein Hindernis für das Betätigungswerkzeug zu bilden.

4. Kupplung (10) nach einem der vorhergehenden Ansprüche, **dadurch gekennzeichnet, dass** das getriebene Rotations-Organ (14) mit radial äußeren Rillen (46) versehen ist und die erste Nabe (36) mit radial inneren Rillen (44) versehen ist, die komplementär zu den Rillen (46) des getriebenen Rotations-Organs (14) sind, wobei die Rillen (46, 44) des getriebenen Rotations-Organs (14) und der ersten Nabe (36) zusammenwirken, um die erste Gleit-Führungs-Verbindung (47) zu bilden.

5. Kupplung (10) nach einem der vorhergehenden Ansprüche, **dadurch gekennzeichnet, dass** die erste Nabe (36) mit radial äußeren Rillen (50) versehen ist und die zweite Nabe (38) mit radial inneren Rillen (48) versehen ist, die komplementär zu den radial äußeren Rillen (50) der ersten Nabe (36) sind, wobei die Rillen der ersten (36) und der zweiten (38) Naben zusammenwirken, um die zweite Gleit-Führungs-Verbindung (51) zu bilden.

6. Kupplung (10) nach einem der vorherigen Ansprüche, **dadurch gekennzeichnet, dass** die radiale Entfernung der zweiten Befestigungsmittel (43) der Reibscheibe relativ zur Achse (Y) des getriebenen Rotations-Organs (14) größer ist als die radiale Entfernung der ersten Befestigungsmittel der Reibscheibe relativ zu dieser Achse (Y) des getriebenen Rotations-Organs (14).

7. Kupplung (10) nach einem der vorherigen Ansprüche, **dadurch gekennzeichnet, dass** das Schwungrad (16) aus tiefgezogenem gestanztem Blech gefertigt ist.

8. Kupplung (10) nach einem der vorherigen Ansprüche, **dadurch gekennzeichnet, dass** das Schwungrad (16) einen durchgehenden oder nicht durchgehenden ringförmigen Anschlag (34) trägt, der mit der Membranfeder (28) zur Zentrierung dieser Membranfeder (28) zusammenwirkt.

9. Kupplung (10) nach einem der vorherigen Ansprüche, **dadurch gekennzeichnet, dass** das Schwungrad (16) mit einem Kranz (23) versehen ist, welcher mit einer als Anlasserkranz (23) bezeichneten Umfangsverzahnung versehen ist.

10. Kupplung (10) nach einem der vorherigen Ansprüche, **dadurch gekennzeichnet, dass** sie einen drehfest mit dem Schwungrad (16) verbundenen Mechanismus (20) aufweist, der einen Deckel (26) aus Gusseisen umfasst, in welchem die Reibungsvorrichtung (22) und die Membranfeder (28) untergebracht sind.

11. Kupplung (10) nach Anspruch 10, **dadurch gekennzeichnet, dass** der Mechanismus (20) eine Druckplatte (30) und eine Gegendruckplatte (52) umfasst, die dazu bestimmt sind, die Reibscheibe (40) einzuspannen, wobei die Gegendruckplatte (52) durch den Deckel (26) gebildet wird.

12. Kupplung (10) nach Anspruch 10 oder 11, **dadurch gekennzeichnet, dass** sie Mittel (35) zur Befestigung des Deckels (26) an dem Schwungrad (16), beispielsweise Verschraubungsmittel umfasst.

13. Kupplung (10) nach einem der vorherigen Ansprüche, **dadurch gekennzeichnet, dass** die Mittel, welche den Zugang für das Betätigungswerkzeug bilden, kranzförmig verteilte Durchbrucheinheiten (60, 62) umfassen, welche jeweils an der Reibungsvorrichtung (22) und der Membranfeder (28) angeordnet sind

14. Verfahren zur Montage einer Kupplung (10) nach einem der vorherigen Ansprüche, **dadurch gekenntzeichnet, dass**
- eine das Schwungrad (16), die Membranfeder (28) und die Reibungsvorrichtung (22) umfassende Gesamteinheit (10) vormontiert wird, und dann
- diese vormontierte Gesamteinheit (10) an dem treibenden Rotations-Organ (12) befestigt wird.
